# EUROPEAN PATENT APPLICATION

(11) **EP 4 600 053 A1**
(43) Date of publication of application: **13.08.2025**
(21) Application number: 24184797.9
(22) Date of filing: 26.06.2024
(51) Int. Cl.: B60C 29/00, F16K 15/20

(54) **PNEUMATIC VALVE SYSTEM**

(30) Priority: 06.02.2024 US 202463550310 P
(71) Applicant: Clik Corporation, Westlake Village, CA 91361 (US); Record S.p.A., 24040 Bonate Sotto (BG) (IT)
(72) Inventor: Quintana, John, Camarillo, California, 93012 (US); Rottoli, Alfredo, 24040 Bonate Sotto (BG) (IT); Micheli, Marco, 24124 Bergamo (IT)
(74) Representative: Petraz, Gilberto Luigi

(57) **Abstract**

A pneumatic valve is provided. The pneumatic valve including a body having a passage therethrough and a circumferential groove about a proximal end of the body, a plug disposed through the passage and extending out of the proximal end of the body and a distal end of the body, and a circumferential gasket attached to a portion of the plug extending out of the distal end of the body. The pneumatic valve also including a spring disposed in the passage and around at least part of the plug. The spring biasing the plug into a first position. When the plug is in the first position the circumferential gasket seals the distal end of the body. When the plug is in a second position the distal end of the body is unsealed.

## Description

### FIELD OF THE INVENTION

The present disclosure relates generally to a pneumatic valve design/system, such as those used with tube and tubeless bicycle tires, and methods of making and using the same. More particularly, the present disclosure relates to improvements in pneumatic valve systems to serve as an alternative to Schrader, Presta, and Dunlop valves, and other pneumatic valves known in the art.

### BACKGROUND OF THE INVENTION

Various pneumatic valves have been long used to regulate pressurized air in tires, tubes, and other pressurized structures. Pneumatic values known in the art include the Schrader (also referred to as an American valve), Presta (also referred to as a French or Sclaverland valve), and Dunlop (also referred to as a Woods, English, or Blitz valve) valves, among others. These valves have been widely adopted in various industries notably tires, including, tube and tubeless tires in bicycle and automotive applications. However, the aforementioned valves known in the art suffer from design flaws which make them difficult and/or awkward to use.

It can be difficult or awkward to attach a pump head to the valve and maintain a reliable, airtight seal while filling the device. This may lead to leaks, drops in air pressure, or unreliable pressure readings which may in turn increase the time required to achieve the desired air pressure in the device.

In the context of bicycle and automotive tires this is especially problematic since a user will often need to be bent or hunched over near the tire to secure and monitor the connection with the valve for prolonged periods of time. Additionally, low pressure or inaccurate pressure readings may cause uneven wear on the tires, reduced vehicle efficiency, reduced tire lifetime, damage to the tire rims, and may even void a manufacturer warranty.

Schrader valves are the most common tire valve, but they suffer from design issues. For example, most if not all Schrader valves use a tool or other object to activate the check-valve to be able to adjust the pressure and doing so without the proper tool risks damaging the valve. Additionally, the pump head is secured to the outside of the Schrader valve creating a large internal surface area connection between the pump head and the valve. As a result, particularly at high pressures, the pump head experiences significant outward forces which may cause or exacerbate leaks and may even dislodge the pump head. As such pump heads for use with Schrader valves often use a locking mechanism to secure the pump head to the valve. The locking mechanism exerts a compression force of the valve and has the potential to damage the valve and/or reduce air throughput/pumping efficiency. Furthermore, such locking mechanisms may be difficult or awkward to operate and involve more user attention or the use of two hands since failure to properly secure the pump head may result in air leaks or the pump head being dislodged. Lastly, the difficulty in securing the pump head to a Schrader valve is particularly detrimental in a racing context where speed, precision, and reliability are paramount.

Presta valves suffer from similar problems to the Schrader valve, i.e., the pump head being dislodged at high pressures. The Presta valve is known as being difficult to use, being sensitive to work with and involving more patience/skill than comparable valves. For instance Presta valves include an additional captive nut that is unscrewed before use as well as using a specialized pump. Once the nut is unscrewed the valve pin is sensitive whereby accidental movement may potentially release air. Presta valves are also relatively long and thin, as opposed to Schrader valves which are short and stout, and are therefore delicate/prone to being damaged.

Accordingly, there exists a need for an improved pneumatic valve which address the above design needs and short comings of conventional devices known in the art.

### SUMMARY OF THE INVENTION

According to an aspect of the disclosure a pneumatic valve including a body having a passage therethrough and a circumferential groove about a proximal end of the body, a plug disposed through the passage and extending out of the proximal end of the body and a distal end of the body, and a circumferential gasket attached to a portion of the plug extending out of the distal end of the body is provided. The spring biasing the plug into a first position. When the plug is in the first position the circumferential gasket seals the distal end of the body. When the plug is in a second position the distal end of the body is unsealed.

According to another aspect of the disclosure the pneumatic valve also includes an O-ring positioned within the air passage towards the proximal end, designed to seal around an inflation tube component of a complementary pump head. Additionally, a spring is disposed in the passage and around at least part of the plug. In another aspect of the disclosure, a spring is disposed in the passage and around at least part of the plug.

The above-described objects, advantages and features of the invention, together with the organization and manner of operation thereof, will become apparent from the following detailed description when taken in conjunction with the accompanying drawings, wherein like elements have like numerals throughout the several drawings described herein. Further benefits and other advantages of the present invention will become readily apparent from the detailed description of the preferred embodiments.

### BRIEF DESCRIPTION OF THE DRAWINGS

FIG. 1A is a perspective view of a pneumatic valve in a first position in accordance with an embodiment;
FIG. 1B is a front view of FIG. 1A;
FIG. 1C is a cross section view of FIG. 1B;
FIG. 1D is a cross section view of FIG. 1B in a second position;
FIG. 1E is a top down view of FIG. 1A;
FIG. 1F is a left side view of FIG. 1A;
FIG. 1G is a cross section view of FIG. 1F;
FIG. 2A is a side view of an inner tube with a pneumatic valve in accordance with an embodiment;
FIG. 2B is an enlarged view of the pneumatic valve of FIG. 2A;
FIG. 2C is a cross section view along line 2C-2C of FIG. 2B;
FIG. 3A is a perspective view of pneumatic valve for use in a tubeless design in accordance with an embodiment;
FIG. 3B is a front view of FIG. 3A;
FIG. 3C is a left side view of FIG. 3A;
FIG. 3D is a cross section view of FIG. 3B;
FIG. 4A is a front view of a pneumatic valve for use in a tubeless design with a disengaged pump head in accordance with an embodiment;
FIG. 4B is a left side view of FIG. 4A;
FIG. 4C is a cross section view of a back view of FIG. 4A;
FIG. 5A is a front view of a pneumatic valve for use in a tubeless design with an engaged pump head in accordance with an embodiment;
FIG. 5B is a left side view of FIG. 5A;
FIG. 5C is a cross section view of a back view of FIG. 5A;
FIG. 6A is a perspective view of a pneumatic valve in a first position in accordance with an alternant embodiment;
FIG. 6B is a front view of FIG. 6A;
FIG. 6C is a left side view of FIG. 6A;
FIG. 6D is a cross section view of FIG. 6B;
FIG. 6E is a cross section view of FIG. 6C;
FIG. 7A is side view of an inner tube with a pneumatic valve in accordance with an alternate embodiment;
FIG. 7B is a cross section view along line 7B-7B of FIG. 7A;
FIG. 8A is a perspective view of a pneumatic valve for use in a tubeless design in accordance with an alternate embodiment;
FIG. 8B is a front view of FIG. 8A;
FIG. 8C is a left side view of FIG. 8A;
FIG. 8D is a cross section view of FIG. 8B;
FIG. 9A is a front view of a pneumatic valve for use in a tubeless design with a disengaged pump head in accordance with an alternate embodiment;
FIG. 9B is a left side view of FIG. 9A;
FIG. 9C is a cross section view of a back view of FIG. 9A;
FIG. 10A is a front view of a pneumatic valve for use in a tubeless design with an engaged pump head in accordance with an alternate embodiment;
FIG. 10B is a left side view of FIG. 10A;
FIG. 10C is a cross section view of a back view of FIG. 10A;
FIG. 11 is a cross section view of a pneumatic valve for use in a tubeless design with a tubeless tire in accordance with an embodiment.

### DETAILED DESCRIPTION

The present disclosure provides exemplary embodiments of a pneumatic valve and related methods of use thereof. The described valve serves as an improved alternative to conventional pneumatic valves known and used in the art for both tube and tubeless tires. The disclosed valve is designed to have backwards compatibility with existing valves and pump heads. Accordingly, it is appreciated that variations in the size, scale, or dimensions of the disclosed valve may vary to comport with known pneumatic valves and pump heads, e.g., Schrader, Presta, or Dunlop valves and pump heads, are contemplated herein. Accordingly, it is expressly within the scope of the present disclosure that the embodiments and teachings described herein are applicable to and may be adapted for use as or with any known pneumatic valves and pump heads, including but not limited to Schrader and Dunlop valves and pump heads.

Additionally, the valve design disclosed herein provides for ease of use and attachment to the valve without the need for a clasp, latch, or other locking mechanism while maintaining a superior seal which reduces or prevents air leaks. Therefore, the present disclosure provides significant improvements in ease of use, reliability, and universal compatibility over known valves.

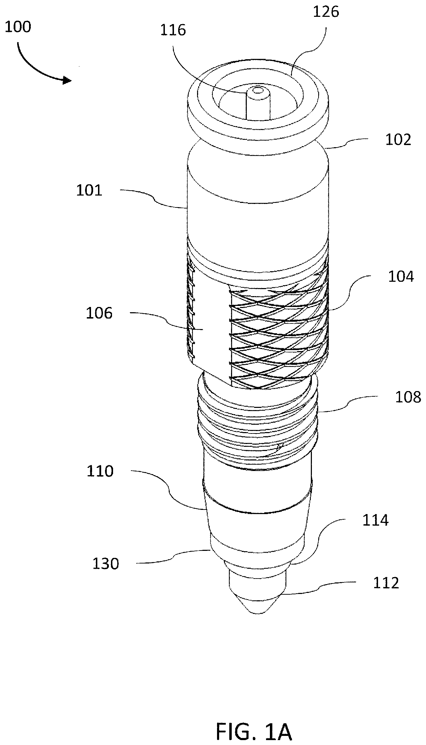

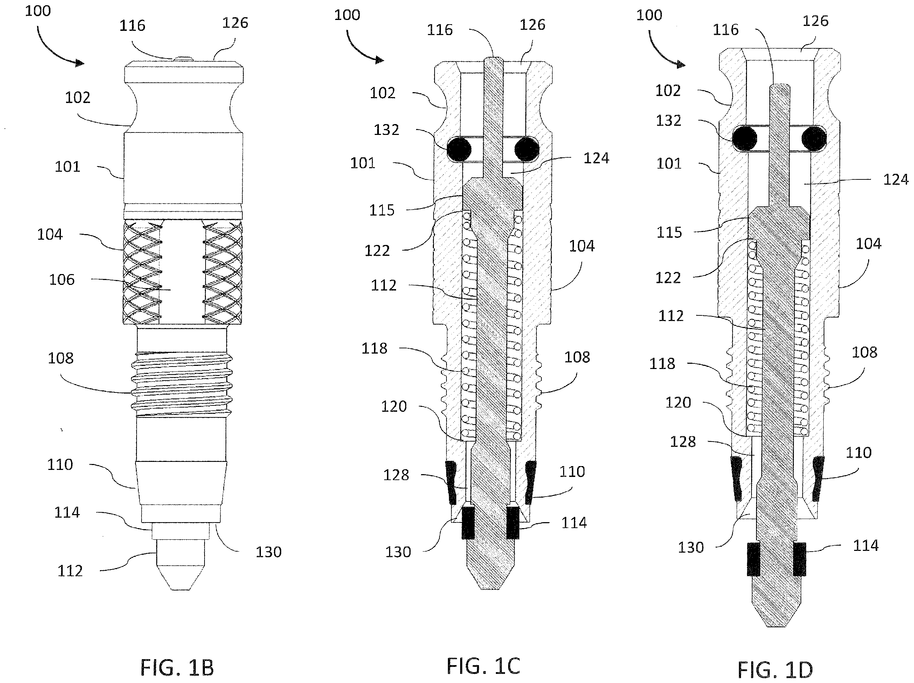

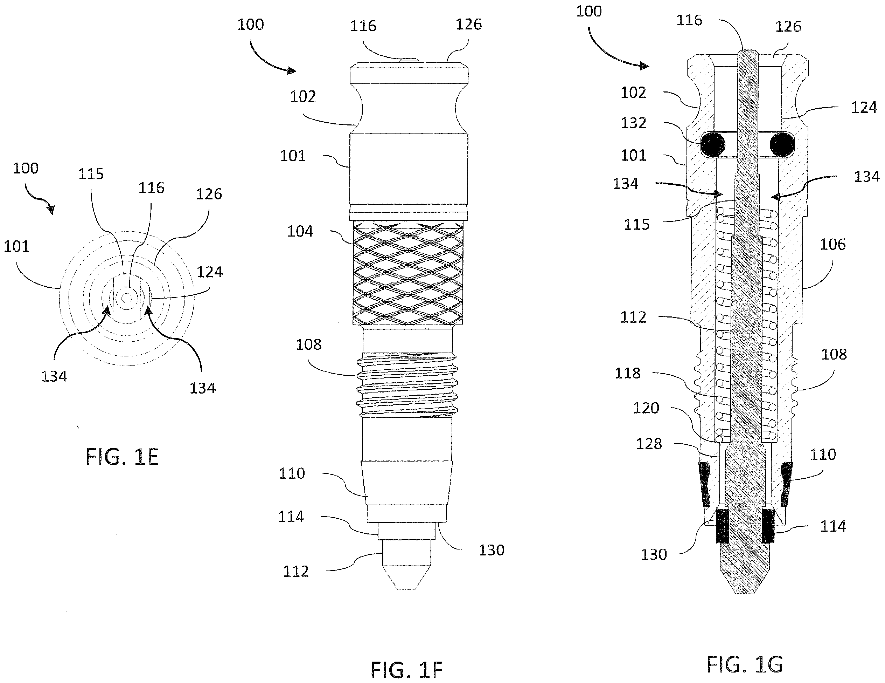

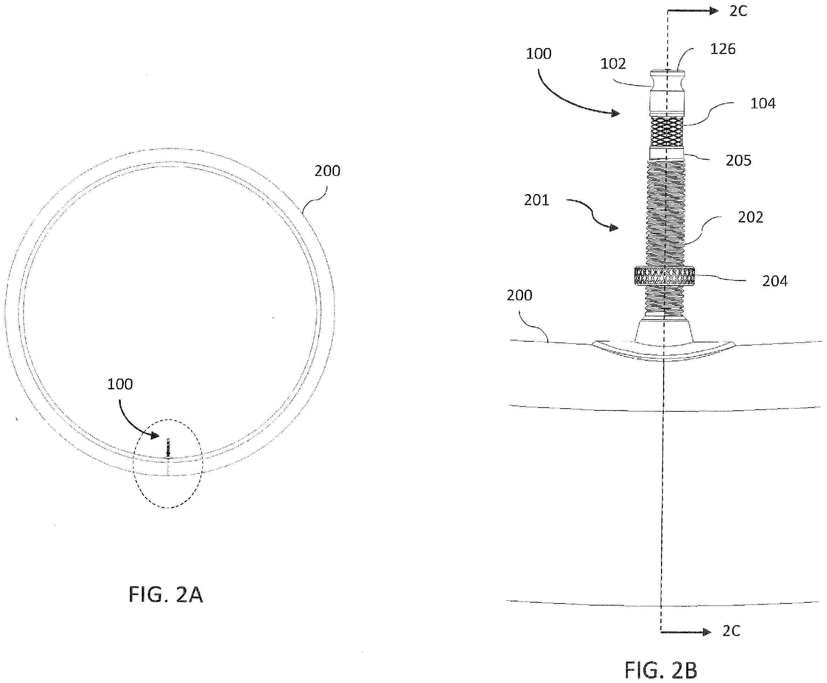

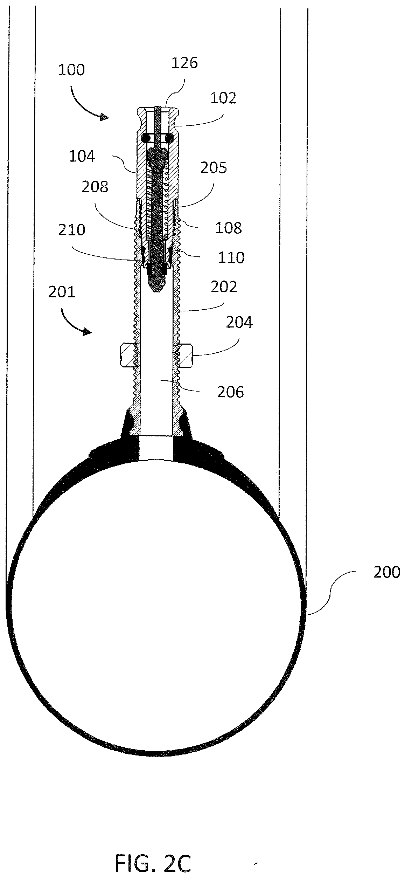

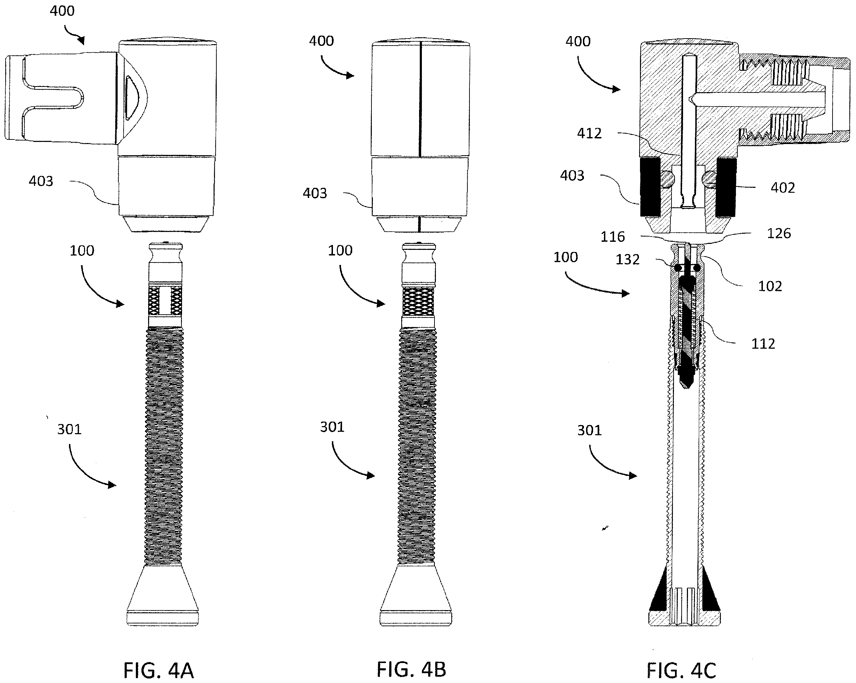

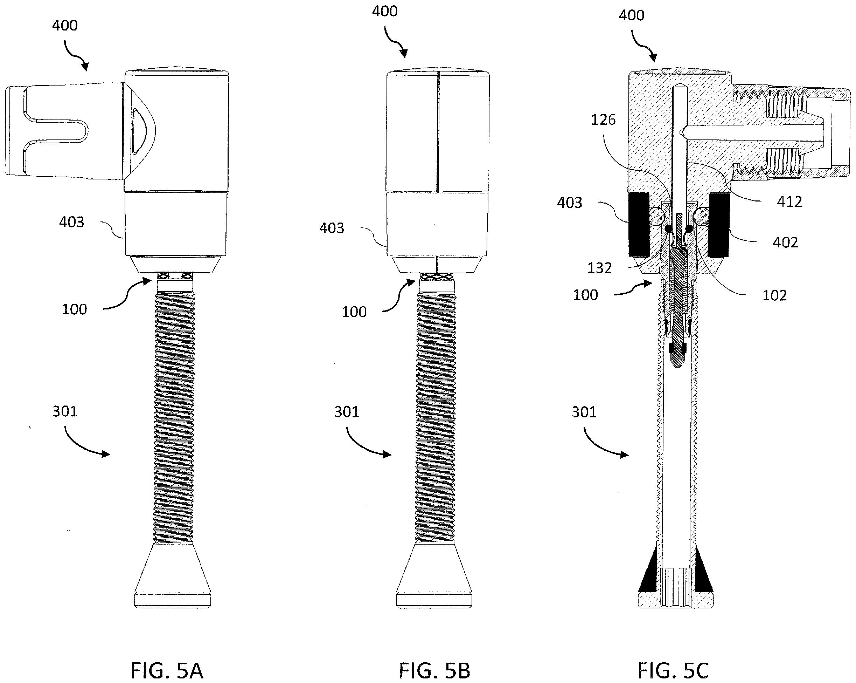

Referring now to FIGS. 1A-F, shown is a pneumatic valve 100 according to an embodiment. The valve 100 may have a generally cylindrical and hollow body 101 with varying diameter geometry along the length of the body 101 having an inlet or first end 126 and an outlet or second end 130. The first end 126 may receive at least a portion of the pump head (shown in, e.g., FIGS. 4 and 5) and the second end 130 may be disposed in a valve stem (shown in e.g., FIGS. 2-5) for discharging air into an inflatable structure. In an embodiment one or both of the first end 126 and the second end 130 may be beveled, chamfered, or otherwise angled. The body 101 may include a groove 102, knurling 104, flat grip 106, and threading 108 on the body 101 and a valve gasket 110 disposed around the body 101 near or adjacent to the second end 130. The groove 102 may be a concave groove about the circumference of the body 101 and may be adapted to receive an O-ring, ball bearing, or other locking geometry. The knurling 104 and flat grip 106 may provide the user superior handling of the valve when attaching/securing the pump head (shown in, e.g.,. FIGS. 4 and 5) or the valve stem (shown in, e.g., FIGS. 2-5).

The valve 100 may also have a passage 124 disposed though the body 101 between the first end 126 and the second end 130. The passage 124 may include an outlet portion 128 near or adjacent to the second end 130. The outlet portion 128 may have a smaller diameter than the passage 124 defining a first shoulder 120 where the passage 124 and outlet portion 128 meet. The passage 124 may also include an O-ring 132 therein, whereby the passage 124 has a groove in the inner diameter of the passage 124 which receives at least a part of the O-ring 132.

A plug 112 may be disposed through the passage 124 and portions of the plug 112 may extend out of the body 101 through the first end 126 and the second end 130. The plug 112 may have a head 115 having a generally T-shape defining a second shoulder 122. As illustrated in FIGS. 1E and 1G, the length of the head 115 may be generally equal to the diameter of the passage 124 with spaces 134 on either side of the head 115 allowing for air to pass into the passage 124. The plug 112 may have a pin 116 extending out from the head 115. In an embodiment the head 115 is located below the O-ring 132 opposite the first end 126 and the pin 116 extends though the O-ring 132 and is partially exposed out of the first end 126. The plug 112 may include a plug gasket 114 disposed around a portion or end of the plug 112 opposite the head 115 and the pin 116. The plug gasket 114 may be sized to, in combination with the plug 112, have a diameter greater than the diameter of the outlet portion 128.

The passage 124 may also house a constant force spring 118 therein. In an embodiment, the spring 118 is a compression spring. Opposing ends of the spring 118 may rest on the shoulders 120, 122 and apply a biasing force on the plug 112 via the second should 122. The spring 118 may bias the valve 100 and plug 112 into a first position (also referred to as a closed or disengaged position). In an embodiment it may be desirable to use a spring 118 with similar load values to known valves when in the first position and the second position (also referred to as an open or engaged position). This may in turn provide a user a similar feel when engaging and disengaging the pump and provide greater backwards compatibility with preexisting systems.

In an exemplary non-limiting embodiment the spring 118 exerts a load of 0.27 lbs (1.2 Ns) when in the first position and a load of 0.53 lbs (2.4 Ns) when in the second position. In a further exemplary embodiment the spring 118 exerts a load of 0.28 lbs (1.2 Ns) when in the first position and a load of 0.51 lbs (2.3 Ns) when in the second position. In yet a further exemplary embodiment the spring 118 exerts a load of between 0.22 and 0.32 lbs when in the first position and a load of 0.48 and 0.58 lbs when in the second position.

In the exemplary non-limiting embodiment illustrated in FIG. 1C, shown is the valve 100 in the closed or first position. The spring 118 biases the plug 112 toward the first end 126 whereby the plug gasket 114 is wedged into the second end 130 and outlet portion 128 creating an air tight seal and the pin 116 extends through the O-ring 132 and partially out of the first end 126. The outlet portion 128 is sized to prevent the plug gasket 114 from passing through the outlet portion 128 even when then plug gasket 114 is compressed due to the force of the spring 118 and pressure forces. Further, the second end 130 is angled and sized to receive the plug gasket 114, thereby creating a tighter seal as the plug gasket 114 experiences higher compression forces.

As further illustrated in FIG. 1D, in an exemplary embodiment, the valve 100 in shown in the open or second position. A force compresses the spring 118 and moves the plug 112 through the second end 130 whereby the end of the pin 116 is below the first end 126 and fully inside the passage 124. The plug gasket 114 is disengaged from the outlet portion 128 and the second end 130 thereby opening the valve 100 to allow air to pass through the first end 126, the spaces 134, the passage 124, the outlet portion 128 and the second end 130.

Referring now to FIGS. 2A-C, shown is an inflatable tube 200 with a valve 100 according to an embodiment. In tube type inflation structures the tube 200 may typically be positioned inside a wheel between the tire and rim and when pressurized will support the tire internally. The tube 200 may have a valve stem 201 integrated therewith such that the valve stem 201 and tube 200 are coupled creating an air tight seal. The outside diameter of the valve stem 201 may have threads 202 along the length of the valve stem 201 between the stem end 205 and the tube 200, the threads 202 being configured to receive a nut 204. The nut 204 may help bias the valve stem 201 to the tube 200 and may improve/strengthen the seal between the valve stem 201 and tube 200.

As illustrated in FIG. 2C, in an exemplary embodiment, the valve stem 201 may be hollow having a stem passage 206. The stem passage 206 may include internal threading 208 near or adjacent to the stem end 205 and may include an inlet portion 210 adjacent to the internal threading 208. The inlet portion 210 of the valve stem 201 may have a smaller diameter than the stem passage 206.

In an embodiment the second end 130 of the valve 100 may be inserted into the stem end 205 and screwed into the valve stem 201, whereby the external threading 108 of the valve 100 is configured to mate with the internal threading 208 of the valve stem 201. The valve gasket 110 is configured to be compressed in the inlet portion 210 of the valve stem 201 creating an air tight seal between the valve 100 and the valve stem 201. In an embodiment the inlet portion 210 may be tapered such that the diameter of the inlet portion 210 is smaller at the end proximal to the tube 200. In this way the valve gasket 110 is under a greater compression force proximal to the second end 130 which may provide a more reliable seal. The flat grip 106 and knurling 104 on the valve 100 may provide a user superior grip and ergonomic support to better grasp the valve 100 when connecting or disconnecting the valve 100 from the valve stem 201. When the valve 100 is fully inserted into the valve stem 201 the flat grip 106 and knurling 104 may be disposed on or adjacent to the stem end 205. The valve 100 and the valve stem 201 may form an air tight corridor between the first end 126, the passage 124, the second end 130, and the stem passage 206 to the interior of the tube 200 allowing the valve 100 to seal and unseal the tube 200 when in a respective first and second position.

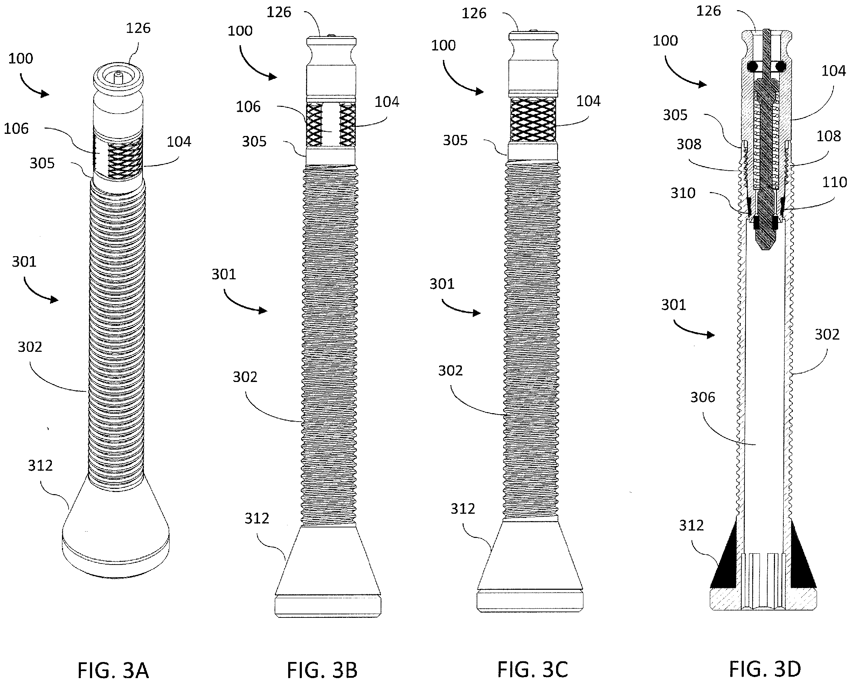

Referring now FIGS. 3A-D, shown is an alternate embodiment of a tubeless valve stem 301. The exterior of the tubeless valve stem 301 may have threading 302 between the tubeless valve stem end 305 and the tubeless valve stem gasket 312. The threading 302 may be configured to receive a nut similar to nut 204. In an embodiment the tubeless valve stem 301 may be inserted through a hole in a wheel rim such that the tubeless valve stem 301 points radially inward. The tubeless valve stem gasket 312 may be disposed on and compressed against a first side of a wheel rim and a nut on threading 302 may be disposed on a second side of the wheel rim applying a compression force creating an air tight seal between the tubeless valve stem 301 and the wheel rim.

As illustrated in FIG. 3D, in an exemplary embodiment, the tubeless valve stem 301 may be hollow having a tubeless stem passage 306. The tubeless stem passage 306 may include internal threading 308 near or adjacent to the tubeless stem end 305 and may include an inlet portion 310 adjacent to the internal threading 308. The inlet portion 310 of the tubeless valve stem 301 may have a smaller diameter than the tubeless stem passage 306.

In an embodiment the valve 100 may be mated with the tubeless valve stem 301 in a similar manner to how the valve 100 is mated with the valve stem 201. The second end 130 of the valve 100 may be inserted into the tubeless stem end 305 and screwed into the tubeless valve stem 301, whereby the external threading 108 of the valve 100 is configured to mate with the internal threading 308 of the tubeless valve stem 301. The valve gasket 110 is configured to be compressed in the inlet portion 310 of the tubeless valve stem 301 creating an air tight seal between the valve 100 and the tubeless valve stem 301. In an embodiment the inlet portion 310 may be tapered such that the diameter of the inlet portion 310 is smaller at the end proximal to the tubeless stem gasket 312. In this way the valve gasket 110 is under a greater compression force proximal to the second end 130 which may provide a more reliable seal. The flat grip 106 and knurling 104 on the valve 100 may provide a user superior grip and/or ergonomic support to better grasp the valve 100 when connecting or disconnecting the valve 100 from the tubeless valve stem 301. When the valve 100 is fully inserted into the tubeless valve stem 301 the flat grip 106 and knurling 104 may be disposed on or adjacent to the tubeless stem end 305. The valve 100 and the tubeless valve stem 301 may form an air tight corridor between the first end 126, the passage 124, the second end 130, and the tubeless stem passage 306 which is sealed and unsealed when the valve 100 is in the respective first and second positions.

Referring now to FIGS. 4A-5C, shown is a valve 100 attached to a tubeless valve stem 301 with and an engaged and disengaged pump head 400 according to an embodiment. The pump head 400 may have ball bearings 402 which are disposed in openings 102 of the valve 100. A biasing member 403 is disposed about the bearings 402 to bias the bearings towards the centerline of the pump head 400. The pump head 400 may also have a pump insert 412 which is connected to an air source.

As illustrated in FIG. 4C, in an exemplary embodiment, when the pump head 400 is disengaged from the valve 100, the valve 100 and the plug 112 are biased by the spring 118 into a closed or first position whereby the valve 100 creates an air tight seal.

As illustrated in FIG. 5C, in an exemplary embodiment, when the pump head 400 is engaged to the valve 100, the bearings 402 are biased into the groove 102 creating a strong gripping force which resists the bias force of the spring 118 and back pressure from a pressure source connected to the tubeless valve stem 301, for example a pressurized wheel. The pump insert 412 passes through the first end 126 of the valve 100 and receives the pin 116 into an open end of the pump insert 412. The lip of the pump insert 412 engages and is disposed on the head 115, depressing the head 115 and plug 112 against the biasing force of the spring 118 and moving the valve 100 and plug 112 into an open or second position. As the plug 112 is moved into the second position, the plug gasket 114 disengages from the outlet portion 128 and the second end 130 while simultaneously the pump insert 412 engages O-ring 132 creating an air tight seal between the pump insert 412 and the O-ring 132. In this way as the pump head 400 is engaged to the valve 100 and the valve 100 is opened, the pump head 400 creates a seal with the valve 100 thereby preventing unwanted pressure loss, for example from a pressurized wheel connected to the tubeless valve stem 301.

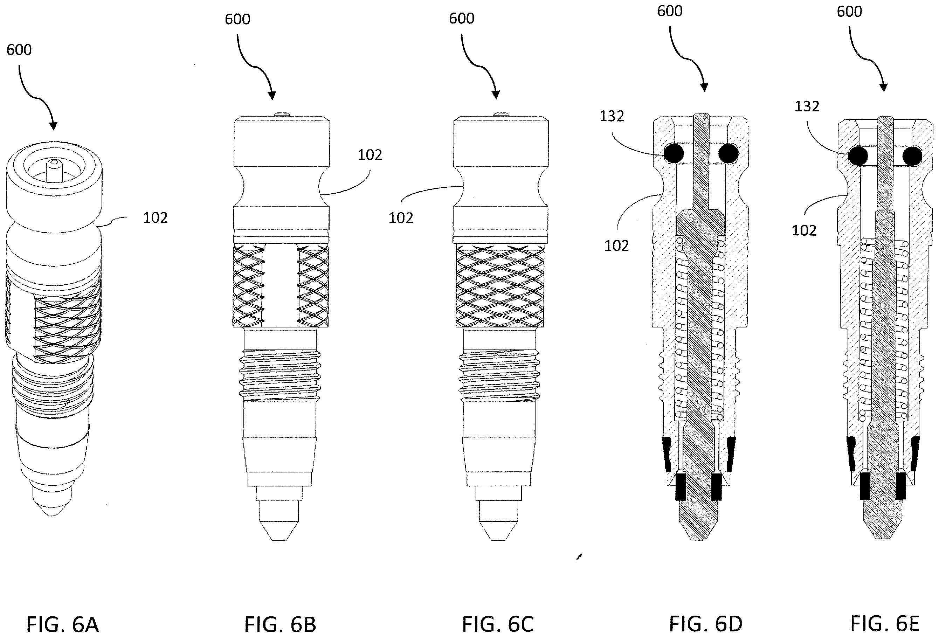

FIGS. 6A-E illustrate a valve 600 according to an alternate embodiment. Valve 600 may be substantially similar to or the same as valve 100, except that O-ring 132 may be positioned closer to the first end 126 than groove 102 such that the O-right 132 and groove 102 are swapped positional on valve 600 compared to valve 100.

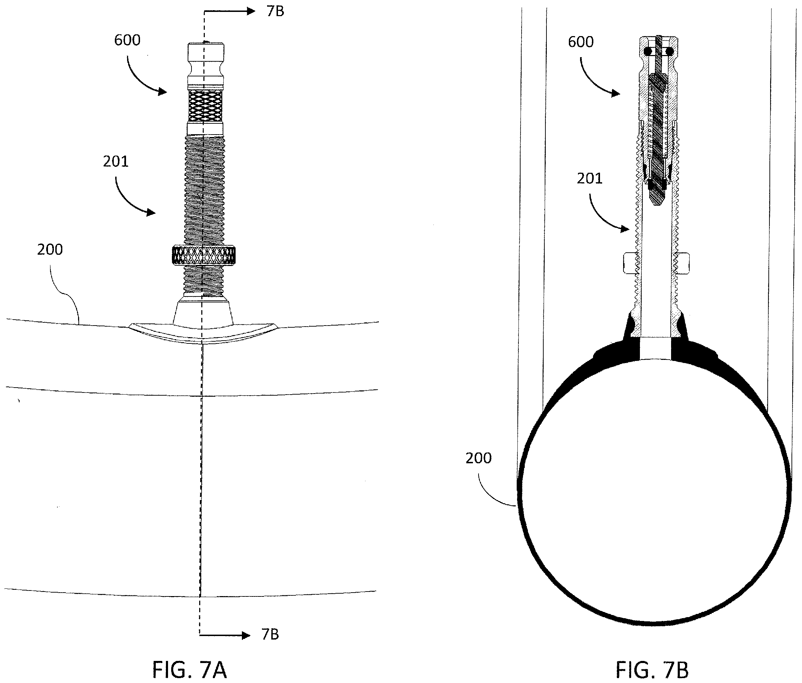

FIGS. 7A-B illustrate the valve 600 used with an inflatable tube 200 and valve stem 201 according to an embodiment. The valve 600 may be used with and connected to the tube 200 and the valve stem 201 in a similar or the same manner as valve 100 described above with reference to FIGS. 2A-C.

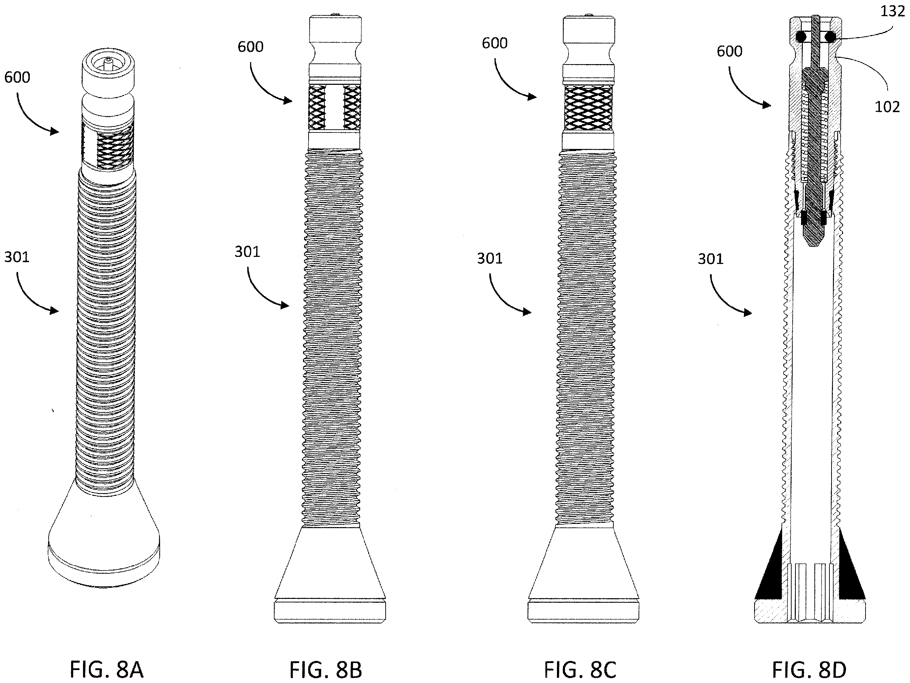

FIGS. 8A-D illustrate the valve 600 used with a tubeless valve stem 301 according to an embodiment. The valve 600 may be used with and connected to the tubeless valve stem 301 in a similar or the same manner as valve 100 described above with reference to FIGS. 3A-D.

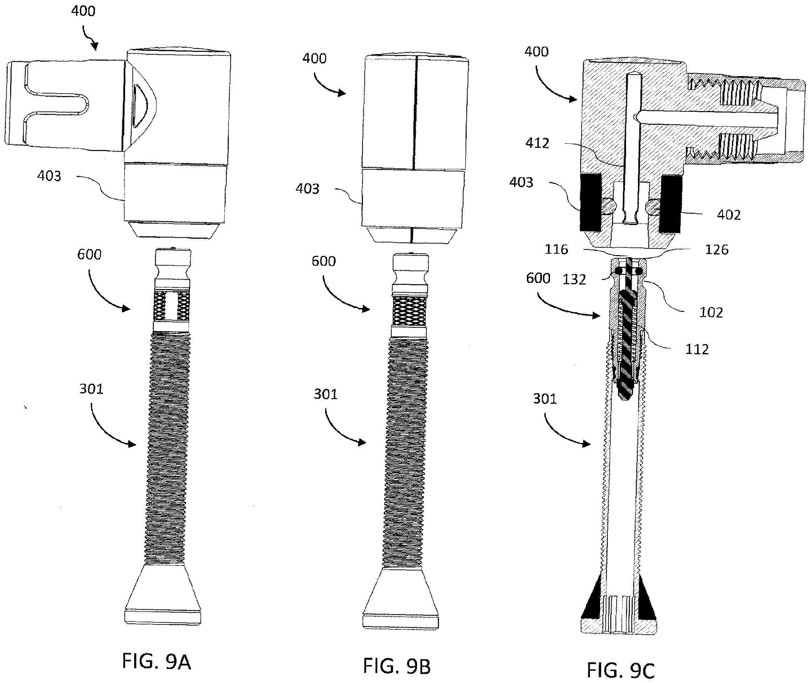

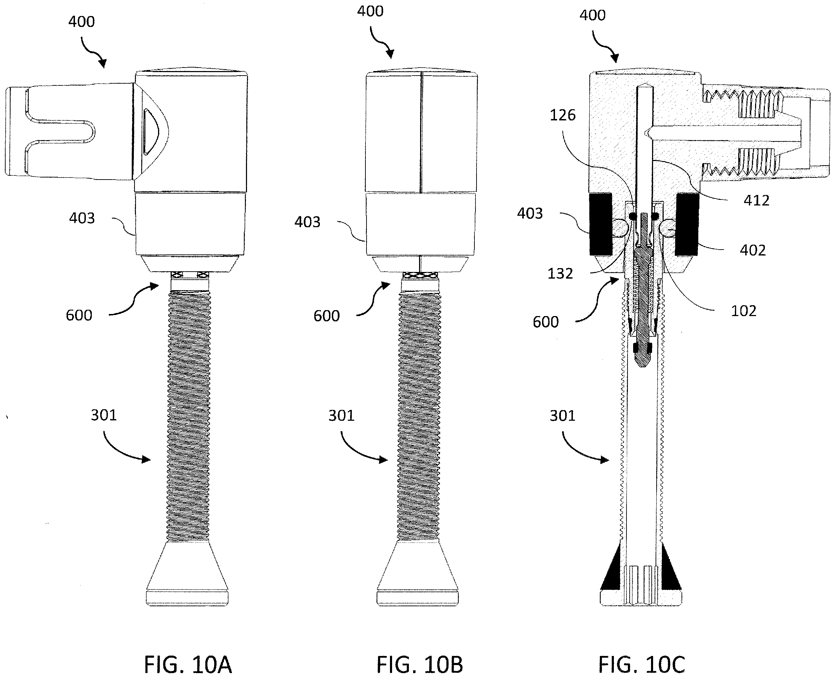

FIGS. 9A-10C illustrate the valve 600 attached to a tubeless valve stem 301 with and an engaged and disengaged pump head 400 according to an embodiment. The valve 600 may be used with and engaged/disengaged from pump head 400 in a similar or the same manner as valve 100 described above with reference to FIGS. 4A-5C. In the illustrated non-limiting embodiment the groove 102 is located further away from the first end 126 which, when the pump head 400 is engaged with the valve 600 (FIG. 10C), may provide a more robust connection since the valve 600 is inserted further into the pump head 400 before the bearings 402 mate with the groove 102. Additionally, the pump insert 412 may engage the O-ring 132 before a lip of the pump insert 412 engages the head 115 of the plug 112 thereby sealing the first end 126 before the second end 130 is unsealed.

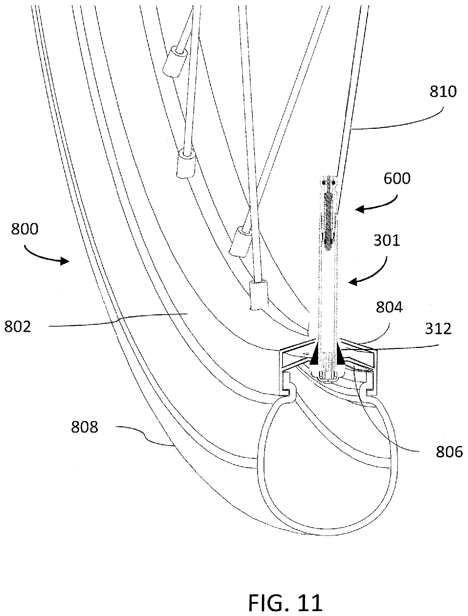

Referring now FIG. 11, shown is a valve 600 attached to a tubeless valve stem 301 used in a tubeless tire 800 according to an exemplary embodiment. The tubeless tire 800 may have a rim 802, a tread or tire casing 808 and spokes 810. The rim 802 may be doubled walled including an interior side 804 and an exterior side 806, with the spokes 810 connected to the interior side 804 extending radially inward. The tread 808 may be coupled or adjacent to the exterior side 806 defining an inflatable interior of the tire 800. In an embodiment the rim 802 may be single walled with the interior and exterior sides 804, 806 being opposing sides of the same wall of the rim 802.

The tubeless valve stem 301 may extend through a hole in the rime 802 extending radially inward such that the tubeless valve stem gasket 312 is disposed on the exterior side 806. The tubeless valve gasket 312 may seal the hole in the rim 802 which the tubeless valve stem 301 extends through. The tubeless valve stem 301 and tubeless valve gasket 312 may be held in place, biased against the exterior side, sealing the hole in the rim 802 by the back pressure in the tire 800. In an alternate embodiment the tubeless valve stem 301 may include a nut 204 (not shown in FIG. 11) disposed thereon, the nut 204 may be tightened against the interior side 804 biasing the tubeless valve gasket 312 against the exterior side 806 thereby sealing the hole in the rim 802. In this embodiment the biasing force of the nut 204 may be in addition to or in place of the back pressure from the tire 800.

In an embodiment the valve (either one of valve 100 or valve 600) may be combined with the valve stem (either one of the valve stem 201 or tubeless valve stem 301) to be a unitary object whereby the a single part may replace and serve the functionality of both the valve and valve stem.

It should be appreciated that while embodiments herein may refer to the various components as being made from a metal material or another material, this is for exemplary purposes and the disclosure should not be so limited. In other embodiment, the various components disclosed herein may be fabricated by injection molding or additive manufacturing with a plastic and/or composite material, or a combination thereof.

The terminology used herein is for the purpose of describing particular embodiments only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

The terms "exemplary" and "alternate" are used herein to mean "serving as an example, instance or illustration." Any embodiment or design described herein as "exemplary" or "alternate" is not necessarily to be construed as preferred or advantageous over other embodiments or designs. The term "connection" can include an indirect "connection" and a direct "connection." It should also be noted that the terms "first", "second", "third", "upper", "lower", and the like may be used herein to modify various elements. These modifiers do not imply a spatial, sequential, or hierarchical order to the modified elements unless specifically stated.

While the disclosure is provided in detail in connection with only a limited number of embodiments, it should be readily understood that the disclosure is not limited to such disclosed embodiments. Rather, the disclosure can be modified to incorporate any number of variations, alterations, substitutions or equivalent arrangements not heretofore described, but which are commensurate with the spirit and scope of the disclosure. Additionally, while various embodiments of the disclosure have been described, it is to be understood that the exemplary embodiment(s) may include only some of the described exemplary aspects. Accordingly, the disclosure is not to be seen as limited by the foregoing description.

## Claims

1. A pneumatic valve comprising:
a unitary body having a passage therethrough and a circumferential groove about a proximal end of the body, the passage having a first portion of a constant diameter from a proximal end, the first portion extending substantially the length of the body, and a second portion extending from the first portion to a distal end of the body;
a plug disposed through the passage and extending out of the proximal end of the body and the distal end of the body;
a circumferential seal attached to a portion of the plug extending out of the distal end of the body; and
a spring disposed in the passage and around at least part of the plug, the spring biasing the plug into a first position;
wherein when the plug is in the first position the circumferential seal seals the distal end of the body; and
wherein when the plug is in a second position the distal end of the body is unsealed.

2. The pneumatic valve of claim 1 further comprising, an O-ring disposed in the passage between the spring and the proximal end of the body, the plug extending through the O-ring.

3. The pneumatic valve of claim 1 further comprising, a valve seal disposed around the distal end of the body.

4. The pneumatic valve of claim 3 further comprising, a stem having a hollow interior, the hollow interior of a proximal end of the stem being size to receive the distal end of the body and the valve seal;
wherein the body mates with the stem; and
wherein the valve seal and the circumferential seal seals the proximal end of the stem.

5. The pneumatic valve of claim 4 wherein, an external threading of the body mates with an internal threading of the stem.

6. The pneumatic valve of claim 4 further comprising, an exterior of the stem being threaded from the proximal end of the stem to a distal end of the stem.

7. The pneumatic valve of claim 6 wherein, the distal end of the stem is coupled to an inflatable tube;
wherein, when the plug is in the first position the circumferential seal seals the inflatable tube.

8. The pneumatic valve of claim 7 wherein, when the plug is in the second position the inflatable tube is unsealed.

9. The pneumatic valve of claim 7 wherein, the stem extends radially inward from the inflatable tube.

10. The pneumatic valve of claim 6 further comprising, a gasket disposed around the distal end of the stem.

11. The pneumatic valve of claim 10 further comprising, a rim having an interior side proximal to a center of the rim and an exterior side distal to the center of the rim, the stem extending radially inward through a hole in the rim;
wherein the gasket is adjacent to the exterior side of the rim and a nut disposed on the exterior threads of the stem is adjacent to the interior side of the rim.

12. The pneumatic valve of claim 11 wherein, the gasket seals the hole in the rim

13. The pneumatic valve of claim 12 wherein, the nut is tightened against the interior side of the rim to bias the gasket against the exterior side of the rim.

14. The pneumatic valve of claim 13 further comprising, a casing coupled to the exterior side of the rim defining an inflatable tire;
wherein, when the plug is in the first position the circumferential seal seals the inflatable tire.

15. The pneumatic valve of claim 14 wherein, when the plug is in the second position the inflatable tire is unsealed.
